# EUROPÄISCHE PATENTSCHRIFT

(11) **EP 0 654 153 B1**
(45) Veröffentlichungstag und Bekanntmachung des Hinweises auf die Patenterteilung: **08.04.1998**
(21) Anmeldenummer: 93918880.1
(22) Anmeldetag: 05.08.1993
(51) Int. Cl.: G03H 1/26, G03H 1/02

(54) **HOLOGRAFISCHES DISPLAY**
HOLOGRAPHIC DISPLAY
DISPOSITIF D'AFFICHAGE

(30) Priorität: 05.08.1992 DE 4225589
(43) Veröffentlichungstag der Anmeldung: 24.05.1995
(73) Patentinhaber: Technische Universität Dresden, 01062 Dresden (DE)
(72) Erfinder: SCHWERDTNER, Armin, D-01259 Dresden (DE); HEIDRICH, Holger, D-01309 Dresden (DE)
(86) Internationale Anmeldenummer: DE9300689
(87) Internationale Veröffentlichungsnummer: WO9403843

(56) Entgegenhaltungen:
- EP-A- 0 449 164
- PROCEEDINGS OF THE SPIE - HOLOGRAPHIC OPTICS: OPTICALLY AND COMPUTER GENERATED Bd. 1052 , 19. Januar 1989 , BELLINGHAM, WASHINGTON, US Seiten 172 - 176 FARHOOSH 'Real-Time Display of 3-D Computer Data Using Computer Generated Holograms' in der Anmeldung erwähnt
- THIRD INTERNATIONAL CONFERENCE ON HOLOGRAPHIC SYSTEMS, COMPONENTS AND APPLICATIONS 16. September 1991 , IEE, LONDON UK Seiten 20 - 23 SATO ET AL 'Holographic Television by Liquid Crystal Device'
- OPTOELECTRONICS-DEVICES AND TECHNOLOGIES Bd. 5, Nr. 1 , Juni 1990 , JP Seiten 91 - 101 KUBOTA ET AL 'Rewritable Computer-Generated Hologram Imaging Using Laser-Addressed Liquid Crystal Light Valve'
- APPLIED OPTICS. Bd. 25, Nr. 9 , 1. Mai 1986 , NEW YORK US Seiten 1380 - 1382 TAI 'Low-Cost LCD Spatial Light Modulator with High Optical Quality'
- PATENT ABSTRACTS OF JAPAN vol. 13, no. 480 (P-952)31. Oktober 1989 & JP,A,01 189 685 (SEIKO EPSON) 28. Juli 1989

## Beschreibung

Die Erfindung betrifft ein holografisches Display zur holografischen Darstellung dreidimensionaler Bilder für Anwendungen in CAD-Systemen, in Bereichen Computer - Vision, virtuelle Realität und Computerspiele, in der Medizintechnik als CT-Ausgabe als Head-up-Display und in anderen Bereichen.

Bekannt ist ein holografisches Echtzeitdisplay (H. Farhoos, u. a.: "Real-Time Display of 3-D Computer Data Using Computer Generated Holograms"; SPIE vol. 1052, p. 172), wobei das computergenerierte Interferenzmuster über eine hochauflösende Bildröhre auf einen Flüssigkristall-Display (ligth valve) abgebildet wird. Nachteilig ist hier vor allem der hohe technische Aufwand und der große Raumbedarf. Einschränkend auf den 3D-Eindruck wirkt sich außerdem das begrenzte Auflöungsvermögen des Aufzeichnungsmediums aus.

Weiterhin bekannt ist ein holografisches Echtzeitdisplay (K. Sato u. a.: "Holographic Television by Liquid Crystal Device"; Third International Conference on Holographic Systems, Components and Applications, Conf. Publ. No. 343, London UK: IEEE 1991, p. 20-23), bei dem die in ein Flüssigkristall-Display eingeschriebene Information holografisch zur Darstellung gebracht wird. Das Verfahren ist aufgrund der Schaltgeschwindigkeit des Displays echtzeitfähig. Nachteilig wirken sich die relativ großen Ausdehnungen der angesteuerten Zellen aus. Dadurch entstehen unter kleinen Beugungswinkeln kleine Bildfelder, die eine visuelle Betrachtung einschränken.

Aufgabe der Erfindung ist es, mit Hilfe von optischen Informationsträgern, deren Zellen in ihren Transmissionseigenschaften steuerbar sind, echte dreidimensionale Bilder zur Darstellung zu bringen, die unter großen Winkeln betrachtet werden können.

Erfindungsgemäß wird die Aufgabe mit den in den Ansprüchen genannten Mitteln gelöst.

Hinreichend kohärentes Licht wird in jeder Zelle des Informationsträgers in der Phase und/oder Amplitude moduliert und punktförmig und damit unter großem Winkel ausgestrahlt. Die Lichtpunkte sind auf einer Fläche in unregelmäßigen Abständen verteilt, wobei die optische Zuordnung zu den einzelnen Zellen gewahrt bleibt.

Es wird ein 3D-Bild erzeugt, das unter großem Winkel betrachtet werden kann. Die Regelmäßigkeit der Zellenanordnung im Informationsträger ist weitgehend aufgehoben. Periodizitätsbedingte Bildüberlagerungen werden deshalb innerhalb des Betrachtungswinkels unterdrückt. Die Fläche, auf der die Lichtpunkte verteilt sind, braucht nicht eben zu sein.

In einer vorzugsweisen Ausführung ist dem Informationsträger eine Lochmaske mit punktförmigen Öffnungen zugeordnet und der Lochmaske eine Linsenmaske, deren Elemente das kohärente Licht in den Öffnungen der Lochmaske fokussieren und dorthin ablenken, vorgeordnet. Die meisten Öffnungen der Lochmaske sind gegenüber den Zellen bei Wahrung ihrer gegenseitigen Zuordnung versetzt angeordnet.

Die Richtungsänderungen sind entweder in einem Mikrolinsen-Array mit integriert oder sie werden durch zusätzliche ablenkende Elemente, wie Blaze-Gitter oder holografische Elemente erzeugt. Die Linsenmaske kann auch vollständig in ihren beiden Funktionen Fokussierung und Ablenkung als holografisches optisches Element gebildet werden.

Eine besonders hohe Präzision der Zuordnung zwischen Linsen- und Lochmaske ergibt sich, wenn die Lochmaske mit Hilfe einer Linsenmaske fotolithografisch strukturiert und anschließend die Öffnungen geätzt werden.

Zusätzlich kann eine Amplitudenmaske vorgesehen werden. Dadurch kann die Amplitude unabhängig von der Phase moduliert werden. Die Amplitudenmaske kann auch dazu genutzt werden, fertigungsbedingte Lichtintensitätsunterschiede zwischen den Öffnungen der Lochmaske auszugleichen.

Der Informationsträger, die Loch- und die Amplitudenmaske können in beliebiger Reihe im Strahlengang angeordnet werden. Lediglich die Linsenmaske kann nicht hinter der Lochmaske liegen.

Ausgehend von einer Anordnung mit Informationsträger, Linsenmaske und Lochmaske kann in einer weiteren vorzugsweisen Ausführung des Grundgedankens auch ohne diese Lochmaske gearbeitet werden. Durch die Linsenmaske sind die Lichtpunkte der optischen Informationen der Zellen in der Fläche, in der sich die Lochmaske befand, fokussiert. Zwischen dieser Fläche und der Linsenmaske kann eine Ablenkungsmaske angeordnet werden, die die optischen Achsen der Fokussierungskegel etwa parallel zur Flächennormalen ausrichtet.

Die Erfindung wird nachfolgend in mehreren Ausführungsbeispielen dargestellt. In den Zeichnungen zeigen
Fig. 1 eine einfache erfindungsgemäße Anordnung,
Fig. 2 ein erfindungsgemäß ausgebildetes holografische Display mit einer Amplitudenmaske,
Fig. 3 ein erfindungsgemäß ausgebildetes holografisches Display mit einer Linsenmaske,
Fig. 4 ein erfindungsgemäß ausgebildetes holografisches Display mit einer geänderten Anordnung der Masken,
Fig. 5 ein erfindungsgemäß ausgebildetes holografisches Display mit einer Linsenmaske ohne Lochmaske.

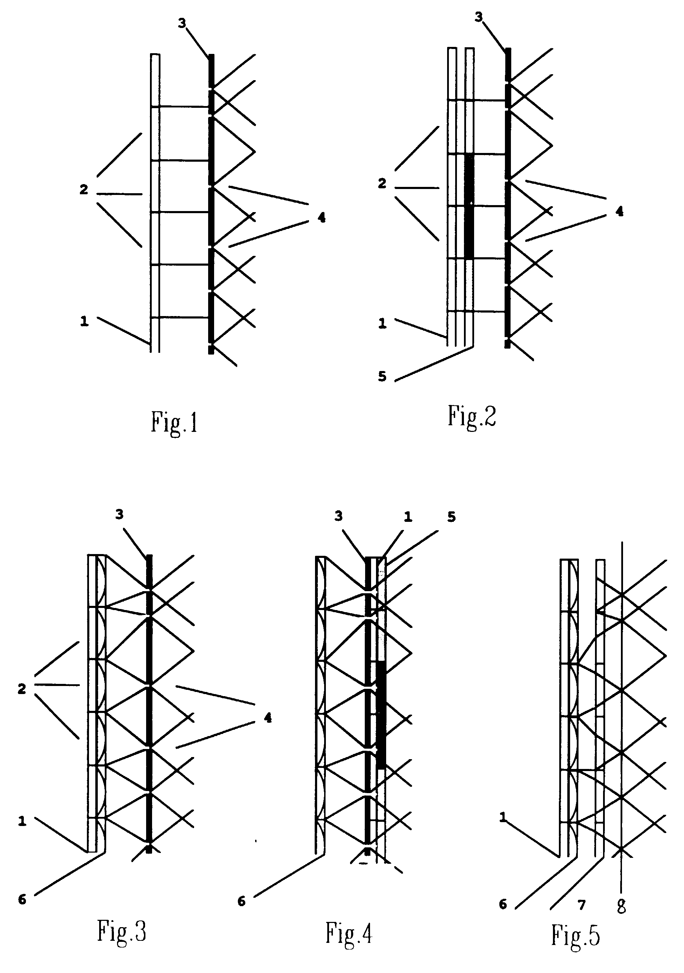

In allen Ausführungen der Figuren 1- 4 sind ein Informations-träger, ein Flüssigkristall-Display 1, mit rasterförmig angeordneten, einzeln ansteuerbaren Zellen 2 und eine Lochmaske 3 mit Öffnungen 4 einander zugeordnet. Der Informationsträger 1 und die Lochmaske 3 sind zwischen einer in den Figuren jeweils an der linken Seite vorgesehenen, aber nicht dargestellten Lichtquelle und einem ebenfalls nicht dargestellten Beobachter, der sich jeweils rechts von den Figuren befindet, angeordnet. Die Lichtquelle strahlt hinreichend kohärentes Licht aus. Die Zahl der Öffnungen 4 der Lochmaske 3 entspricht der Zahl der ansteuerbaren Zellen 2 des Informationsträgers 1. Die Ausdehnung der Öffnungen 4 ist kleiner/gleich 2µm, und damit wesentlich geringer als die der Zellen 2 (ca. 50 µm). Die Lagen der meisten Öffnungen 4 weichen bei Wahrung der Zuordnung zu den Zellen 2 von deren Mittenlagen ab. Größe und Richtung der Abweichungen sind zufällig verteilt, so daß innerhalb des Betrachtungswinkels praktisch keine Periodizität, weder in einer Reihe, noch in einer Spalte, auftreten kann.

In Fig. 1 ist eine sehr einfache Ausführung gezeigt. Das von links auf das Flüssigkristall-Display 1 fallende kohärente Licht wird durch die Transmission der Zellen 2 moduliert. Es breitet sich aufgrund der Größe der Ausdehnungen der Zellen 2 praktisch ungebeugt geradlinig aus, bis es auf die Lochmaske 3 trifft. Aufgrund der Kleinheit der Öffnungen 4 der Lochmaske 3 wird das Licht in große Winkel gebeugt. Das modulierte Licht erzeugt das 3D-Bild. Es kann unter großen Winkeln betrachtet werden.

In Fig. 2 ist zusätzlich eine Amplitudenmaske 5 vorgesehen. Dadurch besteht die Möglichkeit, entweder der Aufgabenteilung, - Phasenmodulation im,Informationsträger 1 und Amplitudenmodulation in der Amplitudenmaske 5 - oder eine zusätzliche Amplitudenmodulation, wenn mit dem Informations-träger auch bereits eine Amplitudenmodulation erfolgt. Die Amplitudenmaske ist hier ebenfalls ein Flüssigkristall-Display.

Die geringe Lichtausbeute bei den Ausführungen nach den beiden ersten Figuren wird durch die zusätzliche Einführung einer Linsenmaske 6 gemäß Fig. 3 wesentlich verbessert. Das Licht jeder Zelle 2 wird auf die zugehörige Öffnung fokussiert. Die Fokussierung ist bei den meisten Punkten, entsprechend der außermittigen Lage der Öffnungen 4 zugleich mit den entsprechenden Richtungsänderungen verbunden.

Fig. 4 zeigt eine geänderte Reihenfolge der Strukturelemente des erfindungsgemäßen holografischen Displays. Von links nach rechts sind angeordnet: Die Linsenmaske 6, die Lochmaske 3, der Informationsträger 1, und die Amplitudenmaske 5.

In Fig. 5 fehlt gegenüber der Ausführung nach Fig. 3 die Lochmaske. Die zuvor in die Öffnungen 4 der Lochmaske fokussierten Lichtpunkte 4 behalten ihre Position. Sie sind wie vorher mit unregelmäßigen Abständen in der Fläche 8 verteilt. Zwischengeschaltet ist eine Ablenkungsmaske 7, die die mit der Linsenmaske abgelenkten optischen Achsen der Fokussierungskegel etwa parallel zu der Flächennormalen ausrichtet.

## Patentansprüche

1. Holografisches Display zur Darstellung von dreidimensionalen Bildern mit
- einer Lichtquelle,
- mit einem im Beleuchtungsstrahl der Lichtquelle angeordneten Informationsträger (1), dessen Zellen (2) in ihren Transmissionseigenschaften individuell ansteuerbar sind zur Modulation des Beleuchtungsstrahls mit der Information des darzustellenden holografischen Bildes,
**dadurch gekennzeichnet, daß**
- jeder der Zellen (2) des Informationsträgers (1) ein Element (4), wie die Öffnungen einer Lochmaske (3) oder wie eine Linsenmaske, die durch eine Ablenkungsmaske (7) auf eine Fläche (8) fokussierte Lichtpunkte erzeugt, zugeordnet ist, das von der zugehörigen Zelle (2) transmittiertes Licht in der Weise einer Punktlichtquelle in große Winkel ausstrahlt, so daß das Bild unter großen Betrachtungswinkeln sichtbar ist,
und daß die Elemente (4) in unregelmäßigen Abständen zueinander über die Fläche des Informationsträgers verteilt sind, so daß innerhalb des Betrachtungswinkels praktisch keine Periodizität auftritt.

2. Holografisches Display nach Anspruch 1, **dadurch gekennzeichnet, daß** dem Informationsträger (1) eine Lochmaske (3) mit punktförmigen Öffnungen (4) zugeordnet ist und die Lagen der meisten Öffnungen (4) in der Lochmaske (3) bei Wahrung ihrer optischen Zuordnung zu ihren Zellen (2) von der Mittenlage ihrer zugehörigen Zellen (2) unregelmäßig abweichen.

3. Holografisches Display nach Anspruch 1, **dadurch gekennzeichnet, daß** dem Informationsträger (1) eine Linsenmaske (6) mit zellenweise angeordneten, fokussierenden Elementen, deren Brennpunkte in einer Fläche (8) mit unregelmäßigen Abständen zueinander liegen, zugeordnet sind.

4. Holografisches Display nach den Ansprüchen 2 und 3, **dadurch gekennzeichnet, daß** die Brennpunkte der fokussierenden und ablenkenden Elemente in den punktförmigen Öffnungen (4) der Lochmaske (3) liegen.

5. Holografisches Display nach Anspruch 3, **dadurch gekennzeichnet, daß** zwischen der Linsenmaske (6) und der Fläche (8), in der die Brennpunkte der fokussierenden und ablenkenden Elemente liegen, eine Ablenkungsmaske (7) mit die optischen Achsen der Fokussierungskegel etwa parallel zur Bildnormalen ablenkenden bzw. ausrichtenden Elementen angeordnet ist.

6. Holografisches Display nach den Ansprüchen 3 oder/und 5, **dadurch gekennzeichnet, daß** die fokussierenden oder/und ablenkenden Elemente holografische optische Elemente sind.

7. Holografisches Display nach Anspruch 1, **dadurch gekennzeichnet, daß** der Lochmaske (3) eine Amplitudenmaske (5) mit die Lichtintensität steuernden Öffnungen zugeordnet ist.

8. Holografisches Display nach Anspruch 3, **dadurch gekennzeichnet, daß** die fokussierenden Elemente in einem Mikrolinsen-Array angeordnet sind.

## Claims

1. Holographic display for producing three-dimensional images, comprising
- a light source,
- with an inforrnation carrier (1) located in the illumination beam of the light source (2), whose cells (2) have individually controllable transmission characteristics for the modulation of the illumination beam with the information of the holographic image to be produced,
**characterized in that**
- each cell (2) of the information carrier (1) is associated with an element (4), as the apertures of a perforated mask (3) or as a lens mask, which produces light points through a deflection mask (7) onto a surface (8), which radiates light transmitted by the associated cell (2) in the manner of a point light source with a large angle, so that the image is visible under large angles of observation,
and in that the elements (4) are distributed over the surface of the information carrier at unequal distances apart so that practically no periodicity occurs within the angle of observation.

2. Holographic display as claimed in Claim 1, **characterized in that** the information carrier (1) is associated with a perforated mask (3) with point apertures (4) and the positions of most of the apertures (4) in the perforated mask (3) irregularly deviate from the central position of their associated cells (2), their optical assignment to their cells (2) being preserved.

3. Holographic display as claimed in Claim 1, **characterized in that** the information carrier (1) is associated with a lens mask (6) with focussing elements in a cell configuration whose focal points lie on a surface (8) at unequal distances apart.

4. Holographic display as claimed in Claims 2 and 3, **characterized in that** the focal points of the focussing and deflecting elements lie in the point apertures (4) of the aperture mask (3).

5. Holographic display as claimed in Claim 3, **characterized in that** between the lens mask (6) and the surface (8) in which the focal points of the focussing and deflecting elements lie a deflection mask (7) is arranged with elements deflecting or aligning the optical axes of the focussing cones about parallel to the image normal.

6. Holographic display as claimed in Claims 3 or/and 5, **characterized in that** the focussing or/and deflecting elements are holographic optical elements.

7. Holographic display as claimed in Claim 1, **characterized in that** the aperture mask (3) is associated with an amplitude mask (5) with apertures controlling the light intensity.

8. Holographic display as claimed in Claim 3, **characterized in that** the focussing elements are arranged in a microlens array.

## Revendications

1. Visuel holographique pour la visualisation d'images en trois dimensions à l'aide
- d'une source lumineuse,
- d'un porteur d'information (1) qui est placé dans un rayon de la source lumineuse et dont les cellules (2) avec leurs propriétés de transmission sont activables individuellement afin de moduler le rayon d'éclairage par les informations sur l'image holographique à visualiser,
**caractérisé par le fait qu'**
- un élément (4) comme les ouvertures d'un masque perforé à trous (3) ou comme un masque à lentilles, produisant des points lumineux focalisés par un masque de déviation (7) sur une surface (8) est attribué à chacune des cellules (2) du porteur d'information (1), qui émet, à la manière d'une source lumineuse ponctuelle, la lumière transmise par la cellule correspondante (2) à grand angle, pour que l'image soit visible sous grands angles d'observation,
et que les éléments (4) sont parsemés à distances irrégulières sur toute la surface du porteur d'information, pour qu'il n'y ait quasiment pas de périodicité à l'intérieur de l'angle d'observation.

2. Visuel holographique d'après la revendication 1, **caractérisé par le fait qu'** un masque perforé à trous (3) avec des ouvertures ponctuelles (4) est coordonné au porteur d'information et que, en gardant leur adjonction optique avec leur cellules (2), la position de la plupart des ouvertures (4) du masque perforé à trous (3) s'écarte irrégulièrement de la position centrale des cellules (2) qui y sont attribuées.

3. Visuel holographique d'après la revendication 1, **caractérisé par le fait qu'** un masque à lentilles (6) est coordonné au porteur d'information (1), garni d'éléments focalisant placés en cellule dont les foyers se trouvent sur une surface (8) à distances irrégulières l'un de l'autre.

4. Visuel holographique d'après les revendications 2 et 3, **caractérisé par le fait que** les foyers des éléments focalisants et déflecteurs se trouvent dans les ouvertures ponctuelles (4) du masque perforé à trous (3).

5. Visuel holographique d'après la revendication 3, **caractérisé par le fait qu'**on a installé entre le masque à lentilles (6) et la surface (8) où se trouvent les foyers des éléments focalisants et déflecteurs, un masque de déviation (7) muni d'éléments qui dévient ou canalisent les axes optiques des pinceaux de focalisation à peu près parallèlement à la normale de l'image.

6. Visuel holographique d'après les revendications 3 ou/et 5, **caractérisé par le fait que** les éléments de focalisation et de déviation représentent des éléments optiques holographiques.

7. Visuel holographique d'après la revendication 1, **caractérisé par le fait qu'**un masque d'amplitude (5) aux ouvertures dirigeant l'intensité lumineuse est associé au masque perforé à trous (3).

8. Visuel holographique d'après la revendication 3, **caractérisé par le fait que** les éléments focalisants sont disposés dans une matrice de microlentilles.
